# EUROPEAN PATENT SPECIFICATION

(11) **EP 0 397 197 B1**
(45) Date of publication and mention of the grant of the patent: **20.03.1996**
(21) Application number: 90108917.7
(22) Date of filing: 11.05.1990
(51) Int. Cl.: H04J 3/16, H04J 3/08

(54) **Synchronous optical transmission system**
Synchrones optisches Übertragungssystem
Système synchrone de transmission optique

(30) Priority: 12.05.1989 US 351861
(43) Date of publication of application: 14.11.1990
(73) Proprietor: ALCATEL N.V., NL-1077 XX Amsterdam (NL)
(72) Inventor: Tyrrell, Raymond Eugene, Raleigh NC 27587 (US); Bishop, Lamar O., Raleigh NC 27613 (US); Briscoe, Rodney M., Raleigh NC 27615 (US); Hurlocker, Claude M., Raleigh NC 27609 (US); Sutherland, Joseph E., Raleigh NC 27609 (US); Fox, William B., Raleigh NC 27606 (US); Dunning, Stephen C., Cary NC 27511 (US); Goodnight, Harold W., Raleigh NC 27613 (US); Krisher, Dale L., Raleigh NC 27613 (US); Thorne, Hal A., Wendell NC 27591 (US); Runyon, Paul V., Raleigh NC 27612 (US); Gingell, Michael J., Raleigh NC 27614 (US); Sanders Jr., Richard J., Raleigh NC 27615 (US); Bernhardt, Keith L., Alpharetta - Georgia 30202 (US)
(74) Representative: Kugler, Hermann, Dipl.-Phys.

(56) References cited:
- PROCEEDINGS IEEE GLOBAL TELECOMMUNICATIONS CONFERENCE, TOKIO, 15.-18. NOVEMBER 1987 vol. 1, NEW YORK, US, PAGES 485 - 489 N.B. SANDESARA ET AL.: 'SYNCHRONOUS OPTICAL NETWORK FORMAT AND TERMINAL APPLICATIONS'
- PROCEEDINGS IEEE GLOBAL TELECOMMUNICATIONS CONFERENCE, HOLLYWOOD, FL, 28. NOVEMBER - 1. DECEMBER 1988 vol. 2, NEW YORK, US, PAGES 980-986 N.B. SANDESARA ET AL.: 'SONET INTRA OFFICE INTERCONNECT SIGNAL'

## Description

The present invention is directed to a transmission system particularly suited for interconnection with high speed data channels conforming to the synchronous optical network (SONET) standard. The transmission system comprises a fiber optic transmission system, terminal multiplexers and add/drop multiplexers which combine to form a system for terminating and adding lower speed channels to a high speed channel conforming to the SONET standard, as well as to interface high speed channels, including SONET high speed channels, to higher speed SONET channels.

A standard has been developed and adopted, directed to a high speed data channel, its associated digital hierarchy, as well as associated optical interface rates and formats for use therein known as the American National Standards Institute, Inc's. "Digital Hierarchy Optical Interface Rates and Format Specification", document T1.105-1988. This standard describes the base rate and format along with a multiplexing scheme which defines a modular family of rates and formats available for use in optical interfaces. This standard defines what is called a synchronous transport signal (STS) operating at level one which is the basic logical building block signal that defines all other STS levels greater than one. Within the STS basic signal, is a byte interleave multiplexing scheme with the basic signal divided into a transport overhead section and a portion which contains a payload, which typically contains lower speed telephonic communication channels and their associated path overhead.

Although the synchronous optical network standard has been defined, devices which interface with it in an overall transmission system have, to date, not been implemented. The present invention is directed to such a transmission system, and in particular defines three basic devices; a fiber transmission system, a terminal multiplexer and an add/drop multiplexer. Each device is able to interface with a high speed signal conforming to the SONET standard and is particularly suited for interfacing such high speed signals to typically lower speed signals of either a different standard, such as the digital signal standards (DS-O, DS-1, DS-2, DS-3, etc.) or lower speed SONET signals such as an STS-1 signal.

A synchronous optical transmission system is presented which comprises three constituent devices, namely; fiber transmission systems (FTS's) terminal multiplexers (TM's) and add/drop multiplexers (ADM's). Each device performs an interfacing function with regard to high speed data channels conforming to the synchronous optical network standard (SONET).

More particularly, the FTS is directed to a device for interfacing high speed signals conforming to the digital signal-3 standard (DS-3) operating at 44.736 mbit/s to an optical carrier-3 (OC-3) level signal operating at 155.52 mbit/s. The FTS is also able to interface a signal conforming to the SONET standard but in an electrical format, that is, a proposed SONET electrical interface standard STSX-1 operating at 51.84 mbit/s, to an optical carrier level 3 signal operating at 155.52 mbit/s. The FTS contains redundant modules for interfacing with either path A or path B used in telephony to convey high speed channel information.

The terminal multiplexer according to the present invention contains redundant high speed ports for interfacing to a SONET STS-1 signal (either electrically via the STSX-1 standard or fiber optically via the OC-1 standard), as well as low speed ports for communicating with DS-1 channels typically operating at 1.544 megabits per second. The DS-1 interface is software provisional for communicating with DS-1 standards conforming to the superframe (SF), extended superframe (ESF), and TR8 framing formats commonly used in telephony. The low speed ports communicable with DS-1 signals are connected to the high speed redundant ports via time slot multiplexers (TSM's).

The time slot multiplexers provide a communication path for provisioning an alarm from the high speed interface to the low speed interface via a network controller. The network controller in turn monitors the system performance and provides A/B path switching (for the redundant paths commonly used in telecommunications) as well as status information communicated to a craft/orderwire/alarm (COA) module. This COA module monitors the A and B paths and determines which side should be active.

Furthermore the terminal multiplexer provides the required DS-1 grooming when it is equipped with time slot multiplexers and has the capability to route any of 28 DS-1's located within a SONET payload to any one of the 28 DS-1 low speed ports.

The add/drop multiplexer is functionally similar to the terminal multiplexer and in addition is equipped with east and west high speed interfaces so as to allow lower speed channels to be dropped or added at the add/drop multiplexer location.

The combined devices can therefore be interconnected to the fiber optic media or coaxial media (for electrical interfaces conforming to the SONET standard) so as to provide the mechanism for an overall transmission system using the SONET standard.

It is a principal object of the present invention to provide a synchronous optical transmission system comprising a fiber transmission system, a terminal multiplexer, and add/drop multiplexer, each for interfacing with a high speed channel conforming to the SONET standard.

Another object of the present invention is to provide a synchronous optical transmission system wherein the fiber transmission system forming part of the overall transmission system is able to interface SONET channels operating at different data rates.

A further object to the present invention is to provide a fiber transmission system capable of interfacing a SONET high speed channel to a DS-3 type high speed channel.

Another object of the present invention is to provide a terminal multiplexer for interfacing a SONET high speed channel to a plurality of lower speed channels.

Another object of the present invention is to provide an add/drop multiplexer able to interface a SONET high speed channel to lower speed channels, as well as to add and drop lower speed channels at a particular add/drop multiplexer location.

A still further object of the present invention is to provide a fiber transmission system, terminal multiplexer, and add/drop multiplexer, each containing internal serial busses conforming to a serial transport frame format wherein data is contained in an internal channel wherein the internal channel comprises a first portion for containing such data and a second portion for containing associated control information.

Other objects of the present invention will in part he obvious and will in part appear hereinafter.

For a fuller understanding of the nature and objects of the present invention, reference should be made to the following detailed description taken in connection with the accompanying drawings, in which:

Figure 1 is a block diagram of a synchronous optical transmission system according to the present invention, illustrating a fiber transmission system, a terminal multiplexer, and an add/drop multiplexer for use in interfacing with one or more high speed channels conforming to the synchronous optical network standard (SONET).

Figure 2 is an overall block diagram of a terminal multiplexer as shown in Figure 1.

Figure 3 is a block diagram of an add/drop multiplexer shown in Figure 1.

Figure 4 is an overall block diagram of the fiber transmission system shown in Figure 1.

Figure 5 is a diagram showing the frame format for a synchronous transport signal frame, specifically an STS-1 frame illustrating both transport overhead in an envelope capacity.

Figure 6 is a diagram illustrating the synchronous payload envelope for transport within the STS envelope capacity.

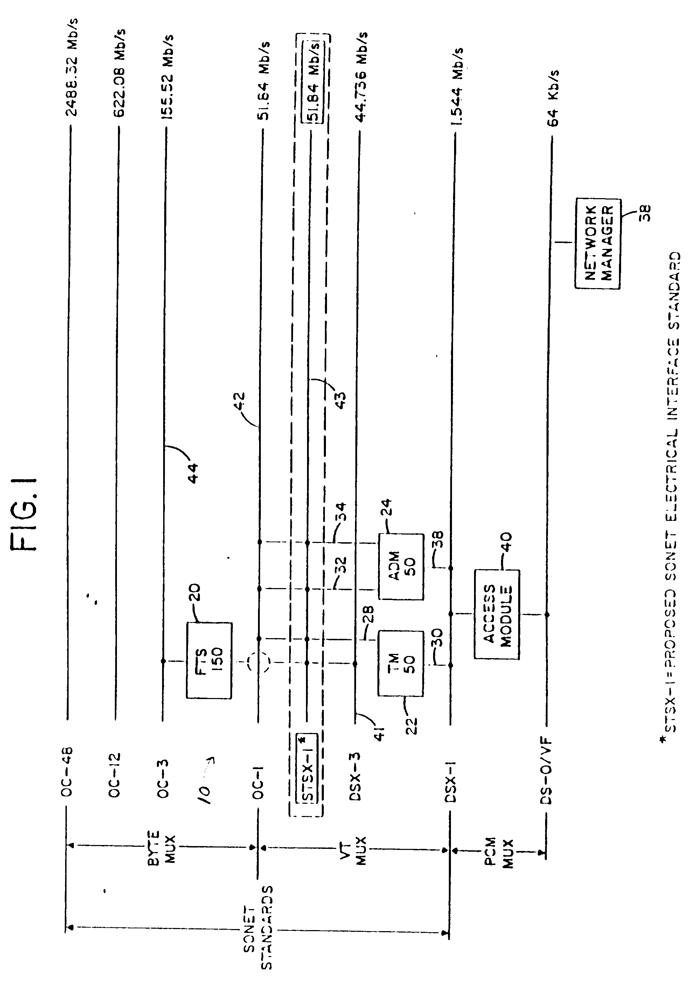

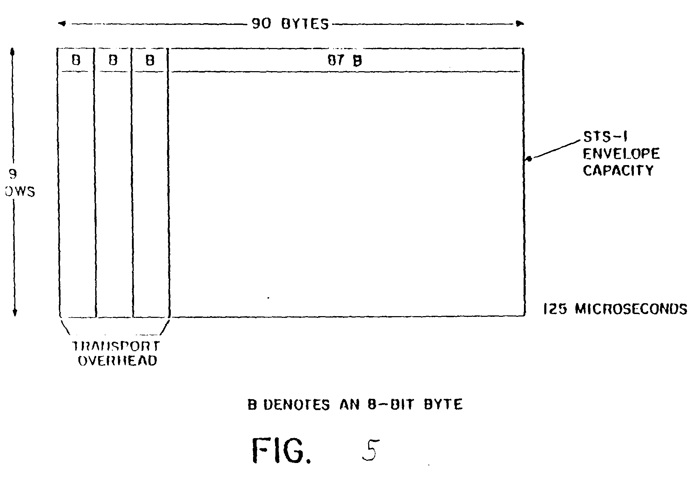

Figure 1 illustrates a synchronous optical transmission system 10 comprising an FTS 20, a TM 22 and an ADM 24, that can interface with an optical carrier (fiber optic) transmission medium such as the optical carrier medium operating within the Synchronous Optical Network (SONET) standard adopted by the American National Standards Institute, Inc. (ANSI) as set forth in their standard No. TI.105-1988 entitled "Digital Hierarchy Optical Interface Rates and Formats Specification". This standard is hereby incorporated by reference. According to the SONET standard an optical carrier level (such as OC-1, OC-3, OC-12, OC-48) is the signal that results from an optical conversion of a Synchronous Transport Signal (STS) operating at the same level. The STS-1 (STS level 1) is defined as the basic building block signal with a transfer rate of 51.840 megabits per second (Mbit/s). Thus an STS-N optical carrier level is simply the level 1 rate multiplied by N, where N is an integer equal to or greater than one. The STS bit stream is presented in a frame where the STS-1 frame comprises 810 bytes which can be visualized as nine rows, each 90 bytes wide (see Figure 5), with the frame period equal to 125 microseconds. The first three columns comprise what is called transport overhead, which in turn comprises section and line overhead. Section overhead deals with the SONET section layer which is directed to the transport of STS-N frames across the physical medium.

The line overhead deals with the line layer which is directed to the transport of Path layer payload. The payload is a synchronous payload whose envelope can reside across parts of two STS-N envelopes (see Figure 5).

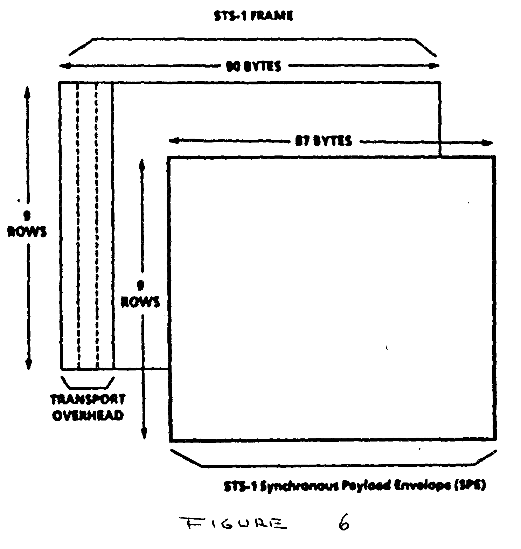

The synchronous payload envelope (SPE) consists of nine rows, each 87 columns wide as shown in Figure 6. The first column contains path overhead leaving 774 bytes available for payload. It is within this payload that channels of telephonic information, comprising channels conforming to various digital signal standards, are contained. As seen in Figure 1, these standards include DS-0 (64 kbits/s), DS-1 (1.544 mbits/s) and DS-3 (44.736 mbits/s).

The fiber transmission system (FTS) 20 is interconnected between an OC-3 carrier operating at 155.52 megabits per second and an electrical DS-3 standard operating at 44.736 megabits per second. The fiber transmission system can also connect to a 55.84 megabits per second electrical interface identified as STSX-1. This interface is an electrical implementation of the synchronized optical network interface (SONET).

The terminal multiplexer (TM) 22 has a high speed port 28 operating at 51.84 mbits/s that can be equipped with either an electrical interface (STSX-1 electrical path) or a fiber optic interface for operation with the OC-1 SONET Standard. The low speed port 30 of the terminal multiplexer is interfaced with a DSX-1 electrical telephony standard operating at 1.544 megabits per second. Each DS-1 interface can incorporate up to 24 DS-0 channels each operating at 64 kilobits per second. The terminal multiplexer therefor interfaces from 1-28 DS1 channels with one OC-1 or one STSX-1 carrier.

The add/drop multiplexer (ADM) 24 is functionally identical to the terminal multiplexer except that the ADM is equipped with east and west high speed interfaces 32 and 34, respectively. The low speed port 38 is similar in operation to the low speed port 30 associated with the terminal multiplexer.

The access module 40 provides conventional interfacing between DS-0 channels operating at 64 kilobits per second and DS-1 channels operating at 1.544 megabits per second. Although used with transmission system 10, it does not form a part of the system described herein since it does not interface with the high speed SONET channels.

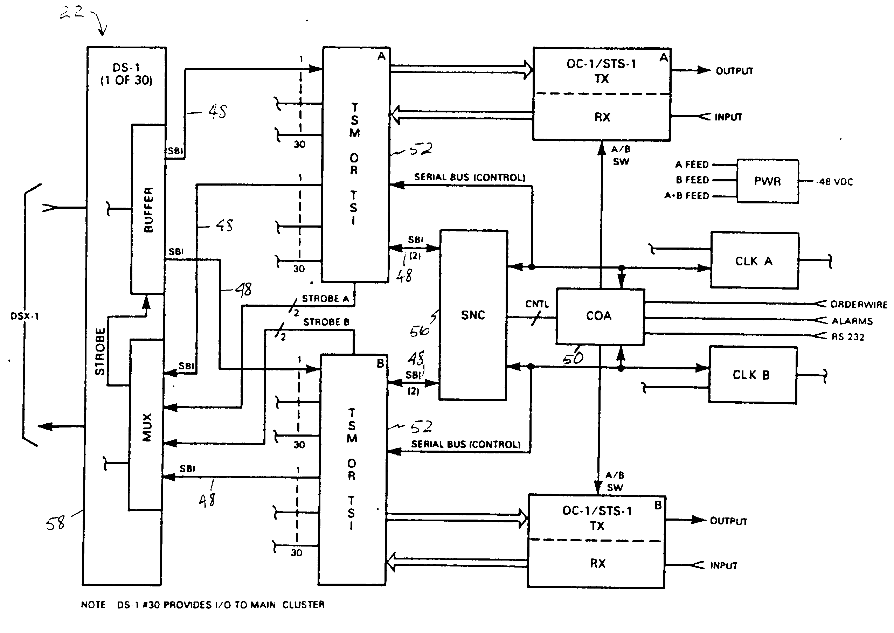

As seen in Figures 2, 3 and 4 the terminal multiplexer 22, add/drop multiplexer 24, and the fiber transmission system 20 each use serial busses 48 which utilize the serial transport frame format of the present invention. By each device using the same serial transport frame format for the exchange of information within modules comprising the respective device, a straightforward implementation for transferring information between modules is achieved.

The serial transport frame format comprises sixteen bits per channel of information. There are 32 channels per frame. The first bit of each channel (bit #0) is the most significant (MSB) and the sixteenth bit is the least significant (LSB).

For telephony information the first eight bits of each channel comprise data (bits D0 through D7) while the remaining bits represent associated control information (bits C0 through C7). The associated control bits may represent any type of control information depending upon the nature of the associated channel data and the needs of the modules interconnected to a serial bus transferring information within this format. This associated control information may comprise address information regarding the channel data, timing information regarding the channel data, data valid and interrupt bits (V and I bits) and parity information regarding the channel. In all situations, the associated control bits represent information respecting the channel data or are "don't care" bits; i.e., bits that convey no particular information regarding the channel data.

Channel zero of each serial transport frame format represents synchronization data and associated control information.

For the device implementations shown in Figures 1, 2 and 3, each terminal multiplexer 22 and each add/drop multiplexer 24 can interface up to 28 DS-1 channels each operating at 1.544 megabits per second with one STSX-1 or one OC-1 channel. Each serial bus is called a serial link and is identified by a number corresponding to its link number. A serial link conveys information in the serial transport frame format, and thus 32 channels are associated with each serial link.

The fiber transmission system, terminal multiplexer, and add/drop multiplexer each comprise the modules set forth in their respective figures 2, 3 and 4.

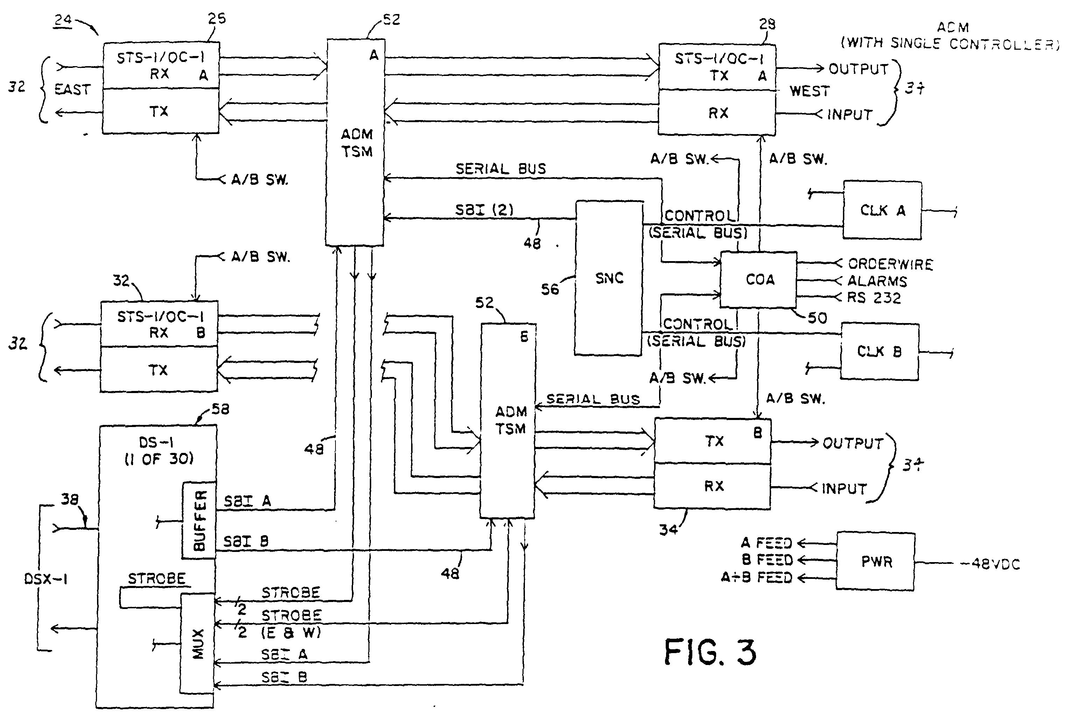

### DS-1 Interface 38 (Figures 2 and 3)

Referring to Figures 2 and 3 with respect to the TM and ADM, the DS-1 interface module 58 comprises a plurality of byte synchronous DS-1 unit interfaces. Each unit interface interfaces one DS-1 signal to the serial bus interface (SBI). The unit interface is provisionable to support D4 standard superframe (SF), D4 extended superframe (ESF), or framing algorithms with either AMI or B3ZS line coding. It preequalizes the DS-1 output in the transmit direction and also responds to UNICODE and looping codes. Test and maintenance of the unit is accomplished by a combination of either local or remote control and is automatically controlled by software and/or manually through external operation interfaces.

In particular, each unit interface interfaces one 1.544 mb/s DS-1 signal to the timeslot multiplexer (TSM) via a 4.096 mb/s serial bus interface, and vice versa. The serial bus interface is composed of thirty-two channels, each comprising sixteen bits of overhead. Of the thirty-two channels, twenty-four channels are used to carry DS-0 channels and the signalling information from the incoming DS-1 data, while four channels are used for synchronization, alarms and communications. The remaining four channels are unused.

Interface module 58 comprises a plurality of DS-1 unit interfaces and as shown in Figures 2 and 3, the TM and ADM both incorporate thirty such DS-1 unit interfaces.

### Timeslot Multiplexer 52 (Figures 2 and 3)

The timeslot multiplexer provides cross-connection between serial busses conforming to the serial transport frame format and an internal parallel bus format.

Thus the timeslot multiplexer provides the cross-connection of DS-1 signals, as well as orderwire, data/communication channels, VI, path tracer and user channels between serial bus interface links and the parallel bus interface. It also provides VI channel cross-connection between the channels of SBI link 30 and the thirty-first channel of links 0 through 30. It provides timing signals to the other units for synchronization of data and address information. An associated serial processor allows a control processor to configure the cross-connect functions of the TSM. The TSM used with the ADM provides data transfer between the east and west parallel bus interfaces.

### Single Network Element Controller 56 (Figures 2 and 3)

The single network element controller (SNC) used in both the TM and ADM provides a general purpose non-redundant control element. The controller comprises an Intel 80C186 microprocessor with an associated 192 K bytes of random access memory as well as up to 640K bytes of program memory using EPROM expansion boards. The SNC provides two asynchronous RS232 interface ports, two synchronous HDLC ports, two asynchronous full duplex serial microprocessor communication ports, and four serial bus interface links. Dedicated direct memory acces is supported with the HDLC ports to enhance processing speed. An external interrupt controller handles the interrupts from the peripherals while a watch-dog timer provides sanity checking.

The SNC is operable in both the TM and ADM in place of dual network element controllers. The SNC provides the same signals to the system as redundant dual network element controllers.

The SNC acts as a master controller for all printed circuit boards associaded with the TM or ADM system and together with the craft/orderwire/alarm (COA) serves as the interface to the outside world for the control and provisioning of the entire TM or ADM system.

### Craft/Orderwire/Alarm (COA) 50 (Figures 2 and 3)

The craft/orderwire/alarm (COA) 50 associated with both the TM and ADM provides craft person interfaces, order wire interfaces, and alarm interfaces to the central office alarm collection facility as well as an A/B or ON/OFF enable interface to associated equipment.

The COA is primarily responsible for providing RS-232 and/or RS-422 interfaces required by the craft and serial E2A interfaces respectively. It also provides conversion of the 4-wire order wire audio into its pulse code modulation (PCM) equivalent for routing through the system. It also provides alarm logic and interface between the NCP and the fuse alarm panel scanner. In addition it provides A/B enable function which controls the enabling of the A/B function on the respective units such as the STT1 and the FTM1 (OC-1/STS-1 module). It also provides enable/disable function to the SBI outputs, a data communication channel reprovisioning function and a lamp test.

A serial communication bus provides the COA access to the SNC. This link is used to exchange configuration, test and status information with the active SNC.

The primary driver of the COA is the SNC. The COA uses a microprocessor to interface with the inputs and outputs except the craft and orderwire interfaces and lamp tests. Local firmware translates the COA inputs to the required output signals.

The microprocessor provides the A/B select function, the alarm/ACO function, the enable/disable of SBI outputs and A/B enable function of respective units, a watch-dog timer function, provisioning of the EEPROM and data communication channel reprovisioning.

Two craft ports provide either two RS-232 interfaces or one RS-232 interface and one RS-422 interface. The COA is transparent to the signals except for a two-to-one multiplexing of the transmitted signals.

The two orderwire interfaces provide analog to pulse code modulation conversion and vice versa, as well as a four-wire interface for each orderwire.

### Clock Module (CLK in Figures 2, 3 and 4)

The clock module used in the TM, ADM and FTS is responsible for providing the synchronization required by the local system in which it is used. Most of the signals generated by the clock module are ultimately synchronized by one common reference. The 21.618 mhz and 8 khz composite clock signals are the only exceptions. All signals which leave or enter the clock module are separately buffered.

A serial communications bus provides the clock module access to a controller card in the system. This link is primarily used to exchange configuration and status information with the local controller.

An 8 bit microcontroller with 128 bytes of on chip random access memory is used which can separately address 64k bytes of program memory and data memory. The 8 bit data bus and lower byte of the address bus are multiplexed onto one 8-bit bus.

The processor runs from an 8.192 mhz clock.

### Fiber Optics Transceiver, OC-1 or STS-1 Module, (Figures 2 and 3)

The fiber optics transceiver interfaces an encoded 51.84 mhz scrambled optical signal to the TM or ADM. The unit recovers clock information and retimes the data. The data is decoded in the fiber optics transceiver and is fed to the timeslot multiplexer along with an associated address. The output portion accepts data from the timeslot multiplexer and generates an optical compatible signal. Provision is made in the transceiver for looping the transmit data to the input of the clock recovery and data retimer.

In the input data path direction, the receive clock is recovered, the serial data is processed and converted to a parallel bus and sent to the timeslot multiplexer. The optic receiver module provides the function of converting the light energy from the fiber associated with the OC-1 signal into a digital ECL signal. The receiver provides a status signal which is low if the power of the incoming signal is less than preset value. The ECL output of the optic receiver is translated to CMOS logic levels.

If the TM or ADM is interconnected with an electrical equivalent of the OC-1 signal; that is, an STSX-1 signal, then an electrical implementation of the transceiver is used. This unit interfaces a 51.84 mhz, B3ZS encoded, AMI signal. The unit is equipped with automatic equalization and an automatic gain control circuit which accommodates the required range of input cable loss and allows a power splitter hybrid to be placed in the path. The unit recovers clock and retimes the data. The data is decoded in the unit and transferred to the timeslot multiplexer along with an associated address. Alarms are provided for loss of signal and some types of B3ZS code violations. The output portion accepts data from the timeslot multiplexer and develops an STSX-1 compatible signal. Provision is made on the unit for squelching the output and looping the B3ZS encoded output to the input.

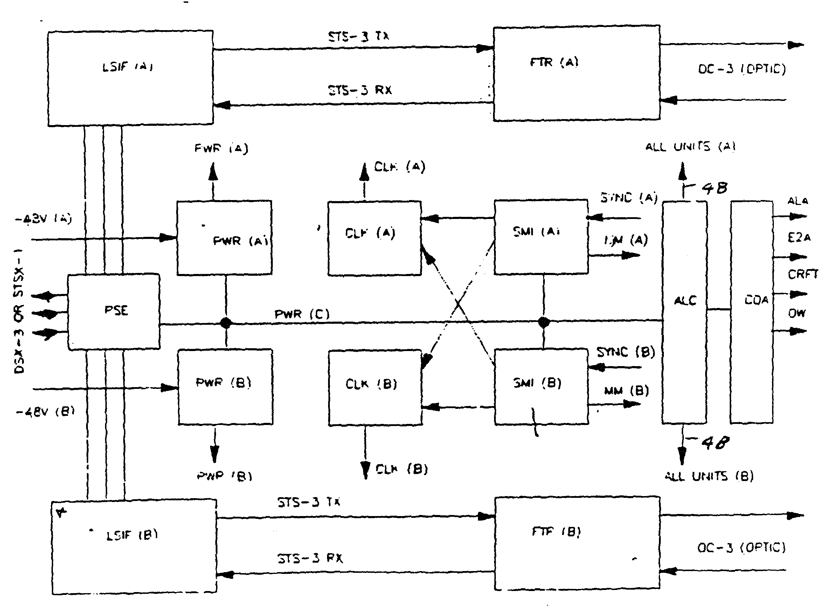

### Fiber Optic Transceiver (FTR) Used in the FTS (See Figure 4)

The fiber transceiver used in the FTS contains an optical transmitter and an optical receiver which provides the optical interface from and to the FTS system and a fiber optic signal operating at an OC-3 bit rate; namely, 155.52 MB/S. The optical transceiver accepts clock and data at 155.52 MB/S from the associated low speed interface (LSIF) and converts this electrical data to optical data. Optical data is also converted to electrical data and clock information which is sent to the LSIF module. The reference clock at 51.84 mhz from the system clock (CLK) is multiplied by *three* by the transceiver and used by the LSIF to synchronize and retime the data sent to it by the optical transceiver. Unit alarms are communicated with the remainder of the FTS system via the alarm (ALC) module.

### Low Speed Interface (LSIF) Figure 4)

The low speed interface used in the FTS is a bi-directional STS-1 to STS-3 multiplexers. The LSIF module accepts three bi-directional signals from the protective switch element, PSE, these signals being generally referred to as low speed signals. In the FTS system, the LSIF module interfaces the fiber transceiver (FTR) module with the transmit and receive STS-3 or DS-3 signals.

The LSIF module interlaces to the alarm (ALC) module via a bi-directional serial bus interface. The serial bus interface transports overhead, command, alarm, status and provisioning information.

The LSIF can be configured to interface with three STS-1 signals, three DS-3 signals or combinations of STS-1 and DS-3 signals.

### Protective Switch Element (PSE), (Figure 4)

The protective switch element used in the FTS provides one-to-one protection switching for the FTS. The protective switch element provides the actual switching of communication traffic on three DS-3 or STS-1 lines. It receives commands from the craft/orderwire/alarm as to which set of electronics to switch to and provides status information as to which side is active to the alarm module (ALC). The protective switch element includes the use of latching relays to reduce power, the ability to provide periodic testing of the relay drive circuitry to reduce silent failures and can select varying length of WE728A equivalent line build-out.

The protective switch element comprises seven blocks; namely, the relay block, the relay driver block, the relay control logic block, the relay status block, the line build-out block, the resistive splitter block, and the remote inventory block.

### Synchronization/Maintenance Interface and SMI (Figure 4)

The synchronization/maintenance interface module (SMI) has three DS-1/SBI interfaces. One of these interfaces provides an 8 khz synchronization to each of the system clocks (CLKA and CLKB). Each of the other two DS-1 interfaces provides an SBI to DS-1 interface between the local alarm (ALC) and the maintenance module operation support system. The SMI has the capability for remote inventory. There is a light emitting diode mounted on the SMI which is externally activated to light in the event of a failure condition.

The SMI module interfaces three clock inputs. Each SMI module receives a 21.616 mhz, an 8.192 mhz, and a 6.176 mhz clock from either clock CLKA or clock CLKB. Each clock is duplicated through a buffer.

In the synchronization mode, a DS-1 interface forming part of the SMI transmits two 8 khz synchronization signals.

In the maintenance mode, DS-1 interfaces #2 and #3, each provide a DS-1/SBI interface. The SMI module has the capability of identifying itself for remote inventory.

### Alarm/Control Processor (ALC) (Figure 4)

The alarm/control module (ALC) serves as the main controller for the FTS and includes either a simplex or dual controller and provides for alarm collection and performance monitoring of the equipment and facilities. The ALC communicates either directly or indirectly with every module associated with the shelf and upgrade clusters.

The ALC comprises a microprocessor and associated memory and a watch-dog timer consisting of a 100 milisecond sanity timer and a 100 milisecond alarm timer. Expiration of the sanity timer resets the ALC while expiration of the alarm timer resets the ALC and sets the minor alarm indication to the craft/orderwire alarm module. The unit alarm light emitting diode is also activated in this condition. The ALC further incorporates an external reset.

The ALC receives discrete alarm signals from the associated power supplies as well as the discrete control and status signals from the craft/orderwire/alarm and protective switch element modules.

Under software control, the discrete status and alarm signals are sent back to the craft/orderwire/alarm module. An ID is encoded into the module to identify the type of controller expected; that is, simplex or dual. In the case of the dual controller, the A or B side is indicated in the identification.

The ALC further incorporates craft interfaces, SBI interfaces and a multiplex function of incoming SBI signals so as to route them to their respective destinations.

Local and express orderwire channels are routed between the LSIF module and the craft/orderwire/alarm module. The VI SBI channels contain provisioning and performance monitoring information which is also processed by the ALC.

The ALC further provides a total of three microprocessor serial interfaces wherein the associated serial links are used for interprocessor communications.

Two interfaces are provided to connect the ALC to the FTS optic modules.

Finally, the ALC provides 8 chip selects for accessing inventory information in the FTS system. One chip select is dedicated to the ALC itself, while the remaining seven chip selects can be used to access other modules forming the FTS.

The present synchronous optical transmission system is an implementation of a transmission system which is able to interface with signals conforming to the synchronous optical network standard as well as with lower speed signals of that same standard and with the lower speed signals associated with standard telephony information such as DS-1 and DS-3 formatted signals. The fiber transmission system of the present invention provides the interfacing between OC-3 and OC-1 or STSX-1 signals, while the terminal multiplexer interfaces OC-1 and STSX-1 signals with lower speed DS-1 signals, along with the necessary grooming and signalling requirements to interface these various signals. The add/drop multiplexer of the present invention is similar to the terminal multiplexer but further provides for adding and dropping of DS-1 signals and the provisions of east and west signals as they pass through the ADM.

Thus what has been described is an overall synchronous optical transmission system incorporating a fiber transmission system, terminal multiplexer and add/drop multiplexer.

It will thus be seen that the objects set forth above and those made apparent from the preceding description are efficiently attained and, since certain changes may be made in carrying out the above devices and associated system without departing from the scope of the claims, it is intended that all matter contained in the above description or shown in the accompanying drawings shall be interpreted as illustrative and not in a limiting sense.

## Claims

1. A synchronous optical transmission system for interfacing with high speed communication channels conforming to the synchronous optical network (SONET) standard so as to convey information to and from said high speed channels operating at different transmission rates, as well as to and from at least one said high speed channel and lower speed channels conforming to other communication standards comprising:
A) a fiber transmission system (20) having;
1) means for interfacing to a communication medium operating at a first SONET high speed channel transmission rate;
2) means for interfacing to a second communication medium comprising a plurality of channels, each operating at a lower transmission rate than the first SONET high speed channel; and
3) means for multiplexing said lower transmission rate channels to the first SONET channel as well as for demultiplexing the first SONET channel to the lower channels; and
B) a terminal multiplexer (22) having;
1) means for interfacing to a SONET high speed channel;
2) a time slot multiplexer (TSM) having a lower speed output, the TSM interconnected to said interfacing means for cross-connecting lower speed channels to and from the SONET high speed channel at the lower speed output of the time slot multiplexer;
3) lower speed channel interfacing means connected to the lower speed output of the TSM for interfacing the lower speed output of the TSM with lower speed channels including means for reformatting the data of the lower speed channel so as to be compatible with the higher speed channel and for converting the formatting of the higher speed channel to the format of the lower speed channel; and
4) means for controlling the cross-connect function of the TSM; and
C) an add/drop multiplexer (24) comprising:
1) means for interfacing (32 east interface) to a SONET high speed channel at a first location,
2) a time slot multiplexer (TSM) having a lower speed output, the TSM interconnected to said add/drop multiplexing interfacing means for cross-connecting lower speed channels to and from the SONET high speed channels at the lower speed output of the TSM;
3) a low speed channel interfacing means connected to the lower speed output of the TSM for interfacing the lower speed output of the TSM with lower speed channels including means for reformatting the data of the lower speed channel so as to be compatible with the higher speed channel and for converting the formatting of the higher speed channel to the format of the lower speed channel;
4) second means for interfacing (34 west interface) to a SONET high speed channels at a second location; and
5) means for controlling the cross-connect function of the TSM.

2. A synchronous optical transmission system as defined in Claim 1, wherein the fiber transmission system (20), the terminal multiplexer (22) and the add/drop multiplexer (24) each further incorporate a craft orderwire alarm (COA) unit for conveying craft orderwire and alarm information to and from the associated fiber transmission system, the terminal multiplexer and the add/dropp multiplexer respectively.

3. A synchronous optical transmission system as defined in Claim 1, wherein the plurality of channels associated with the second communication medium each comprise a SONET channel operating at a lower transmission rate than the first SONET channel.

## Patentansprüche

1. Ein synchrones optisches Übertragungssystem zum Verbinden von Hochgeschwindigkeits-Übertragungskanälen gemäß dem Standard für synchrone optische Netze (SONET), um damit Information von und zu diesen Hochgeschwindigkeitskanälen zu übertragen, die verschiedene Übertragungsgeschwindigkeiten haben, aber auch um Information zu und von mindestens einem dieser Hochgeschwindigkeitskanäle und Kanälen für Signale einer niedrigeren Geschwindigkeit gemäß einem anderen Übertragungsstandard zu übertragen, enthaltend:
A) ein faseroptisches Übertragungssystem (20), enthaltend:
1) Mittel zur Verbindung mit einem Übertragungsmedium, das für (SONET Hochgeschwindigkeit-Übertragungskanäle) einer ersten Übertragungsgeschwindigkeit ausgelegt ist;
2) Mittel zur Verbindung mit einem zweiten Übertragungsmedium, das eine Vielzahl von Kanälen hat, wobei jeder eine niedrigere Übertragungsgeschwindigkeit als der erste SONET Hochgeschwindigkeitskanal hat; und
3) Mittel zum Multiplexen der Übertragungkanäle, die eine niedrigere Übertragungsgeschwindigkeit als der erste SONET Kanal haben, und Mittel zum Demultiplexen des ersten SONET Kanals in den Kanal der niedrigeren Übertragungsgeschwindigkeit; und
B) einen Abschlußmultiplexer (22), enthaltend:
1) Mittel zur Verbindung mit einem SONET Hochgeschwindigkeitskanal,
2) einen Zeitschlitzmultiplexer (TSM), der einen Ausgang für Signale einer niedrigen Geschwindigkeit hat, wobei der TSM mit den Mitteln zum Verbinden verbunden ist, um Kanäle für Signale einer niedrigen Geschwindigkeit zu und von dem an dem Ausgang für Signale einer niedrigen Geschwindigkeit des Zeitschlitzmultiplexers austretenden SONET Hochgeschwindigkeitskanal querzuverbinden,
3) Mittel zum Verbinden der Kanäle für niedrige Geschwindigkeiten, die mit dem TSM Ausgang für Signale niedriger Geschwindigkeit verbunden sind, um diesen Ausgang mit Kanälen einer niedrigen Geschwindigkeit zu verbinden, mit Mitteln zum Umformatieren von im Kanal für niedrige Geschwindigkeiten enthaltenen Daten, so daß dieser Kanal mit dem Hochgeschwindigkeitskanal kompatibel ist, und zum Wandeln des Formats des Hochgeschwindigkeitkanals in das Format des Kanals für Signale einer niedrigen Geschwindigkeit, und
4) Mittel zum Steuern der Querverbindungsfunktion des TSM, und
C) einen Add/Drop Multiplexer (24), enthaltend:
1) Mittel zur Verbindung (32, Ost-Schnittstelleneinrichtung) mit einem SONET Hochgeschwindigkeitskanal an einem ersten Ort,
2) einem Zeitschlitzmultiplexer (TSM), der einen Ausgang für Signale einer niedrigeren Geschwindigkeit hat, und der mit den genannten Add/Drop Mitteln zum Querverbinden von Kanälen niedriger Geschwindigkeit zu und von den SONET Hochgeschwindigkeitskanälen am TSM Ausgang für Signale niedriger Geschwindigkeit verbunden ist,
3) ein Mittel zum Verbinden von Kanälen niedriger Geschwindigkeit, das mit dem TSM Ausgang für Signale niedriger Geschwindigkeit verbunden ist, um den TSM Ausgang für Signale niedriger Geschwindigkeit mit Mitteln zum Umformatieren der Daten des Kanals niedriger Geschwindigkeit zu verbinden, so daß dieser Kanal mit dem Hochgeschwindigkeitskanal kompatibel ist, wobei die Mittel zusätzlich zum Wandeln des Formats des Hochgeschwindigkeitskanals in das Format des Kanals der niedrigeren Geschwindigkeit dienen.
4) zweite Mittel zur Verbindung (34, West-Schnittstelleneinrichtung) mit einem SONET Hochgeschwindigkeitskanal an einen zweiten Ort, und
5) Mittel zum Steuern der Querverbindungsfunktion des TSM.

2. Ein synchrones optisches Übertragungssystem nach Anspruch 1, bei dem das Faserübertragungssystem (20), der Abschlußmultiplexer (22) und der Add/Drop Multiplexer (24) außerdem jeweils eine Wartungs-, Dienstleitungs- und Alarm-Einheit (COA) haben, durch die Informationen über die Wartung, die Dienstleitung und den Alarm zu und von dem jeweils dazugehörigen Faserübertragungssystem, dem Abschlußmultiplexer und dem Add/Drop Multiplexer übertragen werden.

3. Ein synchrones optisches Übertragungssystem nach Anspruch 1, bei dem jeder der Vielzahl der Kanäle, die dem zweiten Übertragungsmedium angehören, einen SONET Kanal hat, der eine niedrigere Übertragungsgeschwindigkeit als der erste SONET Kanal hat.

## Revendications

1. Un système synchrone de transmission optique capable de se connecter à des voies de communication à grande vitesse conformes à la norme de réseau optique synchrone SONET pour transporter des informations en direction et en provenance desdites voies à grande vitesse travaillant à des vitesses de transmission différentes, ainsi qu'en direction et en provenance d'au moins une dite voie à grande vitesse et de voies à basse vitesse conformes à d'autres normes de communication, constitué de :
A) un système de transmission à fibre optique (20) ayant :
1) des moyens pour assurer l'interface avec un support de transmission travaillant à une première vitesse de transmission de voies à grande vitesse SONET :
2) un moyen pour assurer l'interface avec un second support de transmission constitué d'une pluralité de voies travaillant chacune à une vitesse de transmission plus basse que la première voie à grande vitesse SONET et
3) un moyen pour multiplexer lesdites voies de transmission basse vitesse sur ladite première voie SONET ainsi que pour démultiplexer la première voie SONET sur les voies basse vitesse ; et
B) un multiplexeur de terminaux (22) ayant :
1) un moyen pour assurer l'interface avec une voie à grande vitesse SONET ;
2) un multiplexeur temporel (TSM) ayant une sortie basse vitesse et étant interconnecté au dit moyen d'interface pour assurer la connexion croisée des voies basse vitesse en provenance et en direction de la voie à grande vitesse SONET au niveau de la sortie basse vitesse du multiplexeur temporel ;
3) un moyen d'interface de voies basse vitesse connecté à la sortie basse vitesse du TSM pour assurer l'interface entre la sortie basse vitesse du TSM et les voies à plus basse vitesse, comprenant des moyens de reformatage des données des voies à plus basse vitesse pour les rendre compatibles avec la voie à plus grande vitesse et pour convertir le format de la voie à plus grande vitesse au format de la voie à plus basse vitesse ; et
4) un moyen pour commander la fonction de connexion croisée du TSM ; et
C) un multiplexeur d'ajout/suppression (24) comprenant :
1) un moyen pour assurer l'interface avec une voie à grande vitesse SONET (interface 32 est) au niveau d'un premier point,
2) un multiplexeur temporel (TSM) ayant une sortie basse vitesse et étant interconnecté au dit moyen d'interface de multiplexage d'ajout/suppression pour assurer la connexion croisée des voies basse vitesse en direction et en provenance des voies à grande vitesse SONET au niveau de la sortie basse vitesse du TSM ;
3) un moyen d'interface de voies basse vitesse connecté à la sortie basse vitesse du TSM pour assurer l'interface entre la sortie basse vitesse du TSM et les voies basse vitesse, comprenant un moyen de reformatage des données de la voie basse vitesse pour les rendre compatibles avec la voie à grande vitesse et pour convertir le format de la voie à grande vitesse au format de la voie basse vitesse ;
4) un deuxième moyen d'interface (interface 34 ouest) avec des voies à grande vitesse SONET en un second point ; et
5) un moyen de commander la fonction de connexion croisée du TSM.

2. Un système synchrone de transmission optique comme celui qui est défini dans la revendication 1, dans lequel le système de transmission à fibre optique (20), le multiplexeur de terminaux (22) et le multiplexeur d'ajout/suppression (24) comportent en outre, chacun, une unité technique et de ligne de service (COA) pour transmettre les informations de la ligne de service technique et les informations d'alarme en direction et en provenance du système de transmission à fibre optique associé, du multiplexeur de terminaux et du multiplexeur d'ajout/suppression, respectivement.

3. Un système synchrone de transmission optique comme celui qui est défini dans la revendication 1, dans lequel la pluralité de voies associées au second support de transmission comprennent chacune une voie SONET travaillant à une vitesse de transmission plus faible que la première voie SONET.
